# EUROPEAN PATENT APPLICATION

(11) **EP 0 528 462 A1**
(43) Date of publication of application: **24.02.1993**
(21) Application number: 92202196.9
(22) Date of filing: 17.07.1992
(51) Int. Cl.: C08L 69/00, C08L 67/02

(54) **Solvent-resistant polycarbonate-polyester blends with improved impact properties**

(30) Priority: 31.07.1991 US 738458
(71) Applicant: ENICHEM S.p.A., I-20124 Milano (IT); ISTITUTO GUIDO DONEGANI S.p.A., I-28100 Novara (IT)
(72) Inventor: Natarajan, Kavilipalayam, North Brunswick, 08902 New Jersey (US); Arjunan, Palanisamy, Dayton, 08810 New Jersey (US)
(74) Representative: Fusina, Gerolamo

(57) **Abstract**

A moldable polyblend of an aromatic polycarbonate, a thermoplastic polyester an ethylene copolymer containing epoxy groups, which ethylene copolymer contributes improved impact properties and chemical resistance to the blend of the polycarbonate and polyester. The blends of the present invention possess chemical resistance superior to moldable polyblends of polycarbonates and polyesters blended with other impact modifiers.

## Description

### BACKGROUND OF THE INVENTION

The present invention relates to moldable polyblends of aromatic polycarbonates and thermoplastic polyesters blended with an ethylene copolymer containing epoxy groups, which ethylene copolymer contributes improved impact strength and solvent resistance to the blend. In particular, the present invention relates to moldable polyblends of aromatic polycarbonates, thermoplastic polyesters and ethylene-ethyl acrylate-glycidyl methacrylate (EEA-GMA) having improved impact strength and solvent resistance as compared to moldable polyblends of polycarbonates and polyesters blended with known impact modifiers.

Aromatic polycarbonates are a widely used class of thermoplastic molding polymers selected for their superior molding properties. However, molded aromatic polycarbonate articles lack critical thickness impact strength and chemical resistance. This has been overcome by forming polyblends of polycarbonates with thermoplastic polyesters and elastomeric polymer impact modifiers. Articles molded from such polyblends possess suitable impact strength, but the presence of the polycarbonate detracts from the chemical resistance of the blend.

Ethylene copolymers containing epoxy groups are known impact modifiers of aromatic polycarbonates and thermoplastic polyesters. U.S. Patent No. 4,172,859 includes such copolymers among the thousands of elastomers disclosed to be suitable impact modifiers for thermoplastic polyesters, aromatic polycarbonates and blends thereof. Ethylene-methyl acrylate-glycidyl methacrylate is illustrated as an impact modifier for polybutylene terephthalate. However, none of the elastomeric impact modifiers of U.S. Patent No. 4,172,859 are disclosed as improving the chemical resistance of blends of aromatic polycarbonates and thermoplastic polyesters.

Published PCT Application 89-5,838 discloses the use of ethylene copolymers containing epoxy groups as impact modifiers for thermoplastic polyesters, but contains no disclosure regarding the impact modification of blends of aromatic polycarbonates and thermoplastic polyesters, or the improvement of the chemical resistance of such blends. Improvement of the impact properties of polyester molding compositions by the addition of ethylene copolymers containing epoxy groups is also disclosed in Published PCT Application 85-284. This prior art reference is also silent regarding the impact modification of blends of aromatic polycarbonates and thermoplastic polyesters and the improvement of the chemical resistance of such blends by the disclosed impact modifiers. Japanese Kokai 63-113,056 discloses blends of thermoplastic polyesters and ethylene copolymers containing epoxy groups having an excellent balance of low-temperature impact strength, rubber elasticity, heat resistance, wear resistance, chemical resistance, cold strength and rigidity. This prior art reference also contains no teaching regarding blends of aromatic polycarbonates and thermoplastic polyesters. Because thermoplastic polyesters are characterized by excellent chemical resistance, it is not clear from the disclosure of this reference whether the chemical resistance of the blend is contributed by the ethylene copolymer.

There remains a need for moldable polyblends of aromatic polycarbonates and thermoplastic polyesters having both superior impact strength and chemical resistance.

### SUMMARY OF THE INVENTION

It has now been discovered that ethylene copolymers containing epoxy groups are not only excellent impact modifiers of moldable polyblends of aromatic polycarbonates and thermoplastic polyesters, but that these impact modifiers also significantly improve the chemical resistance of these polyblends. Therefore, in accordance with the present invention, there is provided a thermoplastic molding composition prepared from a polyblend of an aromatic polycarbonate with a thermoplastic polyester and an ethylene copolymer containing epoxy groups having the formula:

X/Y/Z

wherein X is a monomeric unit formed from ethylene, present in the copolymer in amounts of from about 50 to about 90 weight percent;
Y is a monomeric unit formed from vinyl acetate, or an acrylate monomer having the structure: 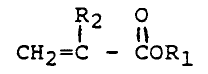
in which R₁ is an alkyl or cycloalkyl group containing from about 1 to about 12 carbon atoms, or a phenyl or alkylphenyl group, the alkyl portion of which contains from about 1 to about 12 carbon atoms. R₂ is selected from hydrogen, methyl and ethyl, and Y is present in the copolymer in a range from about 4 to about 35 weight percent; and
Z is a monomeric unit containing an epoxy group selected from monomers such as glycidyl acrylate and glycidyl methacrylate, present in the copolymer in a range of from about 1 to about 15 weight percent.

The ethylene copolymers containing epoxy groups of the present invention are a class of thermoplastic elastomers suitable for molding, but having substandard thermal properties and processability. However, the properties of these elastomers can be improved by blending with aromatic polycarbonates to improve the thermal properties and with thermoplastic polyesters to improve processability. The thermoplastic polyblends of the present invention will therefore include polyblends in which the aromatic polycarbonate predominates, polyblends in which the thermoplastic polyester predominates, and polyblends in which the ethylene copolymer containing epoxy groups predominates. It is therefore in accordance with the present invention that the thermoplastic polyblends contain between about 5 and about 90 percent by weight of an aromatic polycarbonate, between about 5 and about 90 percent by weight of a thermoplastic polyester, and between about 5 and about 90 percent by weight of an ethylene copolymer containing epoxy groups.

In accordance with the present invention, there is also provided a method for producing a molded polyblend by forming a polyblend of an aromatic polycarbonate with a thermoplastic polyester and an ethylene copolymer containing epoxy groups, and then molding the formed polyblend.

### DETAILED DESCRIPTION OF THE PREFERRED EMBODIMENT

The moldable polyblends of the present invention contain aromatic polycarbonates. Any aromatic polycarbonate suitable for use in thermoplastic molding compositions can be employed in the polyblends of the present invention. The useful aromatic polycarbonate resins may include homopolycarbonate, copolycarbonate and terpolycarbonate resins or mixtures thereof. The polycarbonate resins may be prepared by the known polycondensation of phosgene and aromatic dihydroxy compounds as taught by H. Schnell, Chemistry and Physics of Polycarbonates, (Interscience Publishers, New York 1964), the teachings of which are hereby incorporated herein by reference thereto.

Such suitable polycarbonates are typically manufactured from aromatic dihydroxy compounds such as resorcinol, hydroquinone, dihydroxydiphenyls, bis-(hydroxyphenyl)-derivatives and the like. Among the bis-(hydroxyphenyl)-derivatives useful in the practice of the invention are bis-(hydroxyphenyl)-alkanes, -cycloalkanes, -ethers, -ketones, -sulfoxides, -sulfones and alpha, alpha-bis-(hydroxyphenyl)-diisopropylbenzenes. These and further suitable polycarbonates are taught by U.S. Patent Nos. 3,028,365, 2,999,835, 3,148,172, 3,271,368, 2,991,273, 3,271,367, 3,280,078, 3,014,891 and 2,999,846; German Published Specification Nos. 1,570,703, 2,063,050, 2,063,052, 2,201,956 and 2,111,957; French Published Specification No. 1,561,418; and in Schnell, Chemistry and Physics of Polycarbonates, the teachings of all of which are hereby incorporated herein by reference thereto.

The most preferred aromatic polycarbonates for use in the polyblend compositions hereof include bis-(hydroxyphenyl)-derivatives, including 2,2-bis-(4-hydroxyphenyl)-propane (i.e., Bisphenol A), 2,4-bis-(4-hydroxyphenyl)-2-methylbutane, 1,1-bis-(4-hydroxyphenyl)-cyclohexane, alpha, alpha-bis-(4-hydroxyphenyl)-p-diisopropylbenzene, 2,2-bis-(3-chloro-4-hydroxyphenyl)-propane,4,4'-dihydroxybenzophenone, 4,4'-sulfonyldiphenyl, and 2,2-bis(2,3,5,6-tetramethyl-4-hydroxyphenyl)propane (i.e., Tetramethyl Bisphenol A). The most preferred bis-(hydroxyphenyl)- derivatives are Bisphenol A and Tetramethyl Bisphenol A.

The polycarbonates of the invention may contain units derived from one or more of the suitable bis-(hydroxyphenyl)-derivatives. The polycarbonates useful to the invention may be prepared by any of the processes known in the art, such as by interfacial polycondensation, polycondensation in a homogeneous phase or by transesterification. The suitable processes and associated reactants, catalysts and solvents are known in the art and have been taught in the above polycarbonate patents, as well as in U.S. Patent Nos. 3,248,414, 3,153,008, 3,215,668, 3,187,065, 2,964,974 and 1,991,273; and German Patent Nos. 1,046,311 and 962,274, the teachings of all of which are hereby incorporated herein by reference thereto.

Also useful in the practice of the invention are branched polycarbonates derived from aromatic phenolic compounds with three or more hydroxyl groups, as taught in Published German Specification Nos. 1,596,762, 2,116,974 and 2,113,347; Published British Specification No. 1,079,821 and U.S. Patent No. 3,544,514, the teachings of all of which are hereby incorporated herein by reference thereto. Examples of phenolic compounds with three or more hydroxyl groups are disclosed in U.S. Patent No. 4,554,314, the disclosure of which is hereby incorporated herein by reference thereto.

Phenolphthalein based polycarbonate, copolycarbonate and terpolycarbonate resins are also suitable in the practice of the present invention, and are described in U.S. Patent Nos. 3,036,036 and 4,210,741, both of which are hereby incorporated herein by reference thereto.

The polycarbonate resins useful in the practice of the invention have weight average molecular weights of at least about 15,000 daltons and generally between about 20,000 and about 60,000 daltons and preferably have weight average molecular weights between about 25,000 and about 50,000 daltons. The polycarbonate resins are additionally characterized by a melt flow of between about 5.0 and about 17.0 g/10 min. at 280°C as determined by ASTM D-1238.

The amount of aromatic polycarbonate utilized should be that quantity sufficient to provide the blend with desired thermal properties. As noted above, the polyblend can contain from about 5 to about 90 percent by weight polycarbonate. Preferably, the polyblend will contain from about 30 to about 70 percent by weight polycarbonate.

The thermoplastic polyesters utilized in the moldable polyblends of the present invention may be any such polyester suitable for use in thermoplastic molding compositions. Preferred polyesters include the condensation products of dicarboxylic acids and diols. The dicarboxylic acid component of more preferred polyesters contain at least 20 percent aromatic dicarboxylic acids selected from terephthalic acid, isophthalic acid, napthalene dicarboxylic acid, diphenylether dicarboxylic acid, diphenyl dicarboxylic acid, diphenylsulfone dicarboxylic acid, diphenoxyethane dicarboxylic acid and the like. The non-aromatic component of the dicarboxylic acid is selected from succinic acid, adipic acid, sebacic acid and the like.

The diol component of more preferred polyesters may be selected from aliphatic diols containing from 2 to 10 carbon atoms. Such diols include ethylene glycol, diethylene glycol, trimethylene glycol, tetramethylene glycol and the like.

Even more preferred polyesters are poly(alkylene terephthalates) characterized in general by structural units of the formula: 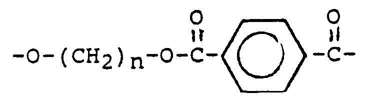
wherein n is an integer between 2 and 6. The most preferred polyester is poly(ethylene terephthalate) (PET). Suitable thermoplastic polyesters are further characterized as having intrinsic viscosities between about 0.4 and about 1.5 g/dL and preferably between about 0.6 and about 1.1 g/dL. The intrinsic viscosity is obtained by extrapolation of viscosity values to zero concentration of solutions of the polyester in a 60/40 vol./vol. ratio blend of 1,1,2,2-tetrachloroethane and phenol at 25°C. Essentially, any thermoplastic polyester suitable for use in molding compositions can be utilized with the present invention. Such polyesters are taught by U.S. Patent No. 2,465,319 and may be derived by the preparation methods disclosed therein and by U.S. Patent No. 3,047,539, both of which are hereby incorporated herein by reference thereto.

The amount of thermoplastic polyester utilized should be that quantity sufficient to improve the processability of the blend. As noted above, the polyblend can contain from about 5 to about 90 percent by weight thermoplastic polyester. Preferably, the polyblend will contain from about 30 to about 70 percent by weight of thermoplastic polyester.

The thermoplastic moldable polyblends of the present invention also include an ethylene copolymer containing epoxy groups. Ethylene copolymers containing epoxy groups suitable for use in the present invention are characterized by the formula:

X/Y/Z

X is a monomeric unit formed from ethylene, and is present in the copolymer in a range from about 50 to about 95 weight percent. Preferably, X is present in the copolymer in a range from about 60 to about 84 weight percent.

Y is a monomeric unit formed from vinyl acetate or an acrylate monomer having the structure: 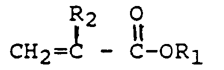
R₁ is an alkyl or cycloalkyl group containing from about 1 to about 12 carbon atoms and preferably from about 1 to about 6 carbon atoms. R₁ is most preferably an ethyl group. R₁ can also be a phenyl or alkylphenyl group, the alkyl portion of which contains from about 1 to about 12 carbon atoms, and preferably from about 1 to about 6 carbon atoms. R₂ is either hydrogen, methyl or ethyl, and is preferably hydrogen. Y is most preferably ethyl acrylate. Y is also preferably vinyl acetate. Y is present in the copolymer in a range from about 4 to about 35 weight percent, and is preferably present in the copolymer in a range from about 15 to about 30 weight percent.

Z is a monomeric unit containing an epoxy group and is selected from monomers such as glycidyl acrylate and glycidyl methacrylate. Z is preferably glycidyl methacrylate. Z is present in the copolymer in a range from about 1 to about 15 weight percent, and is preferably present in the copolymer in a range from about 1 to about 10 weight percent.

The ethylene copolymer containing epoxy groups can be either a random or block copolymer. Block copolymers contribute greater impact modifying properties and are therefore preferred.

The ethylene copolymers containing epoxy groups suitable for use in the present invention can be prepared by well-known direct random or block copolymerization methods. For example, by combining each of the three monomers X, Y and Z can be combined in the presence of a free-radical polymerization initiator at elevated temperatures and at elevated pressures, as disclosed in Published PCT Application 85-284, the disclosure of which is hereby incorporated herein by reference hereto. The ethylene copolymers containing epoxy groups are characterized by a melt flow of between about 2 and about 15 g/10 min. at 190°C with a 2.16 kg weight as determined by ASTM D-1238.

The amount of ethylene copolymer containing epoxy groups should be that quantity sufficient to improve the impact strength and chemical resistance of the polyblend. As noted above, the polyblend can contain from about 5 to about 90 percent by weight of the ethylene copolymer containing epoxy groups. Preferably, the polyblend will contain from about 10 to about 30 percent by weight of the ethylene copolymer containing epoxy groups.

The moldable polyblend of the present invention is suitable to produce molded articles using conventional molding apparatus. As such, the polyblend can optionally contain in amounts from about zero to about 50 percent by weight of the total formula weight of art-recognized additives such as pigments, fillers, stabilizers, fire retardants, lubricants, vulcanizing agents, antidegradants, antioxidants, processing aids, adhesives, tackifiers, plasticizers, prevulcanization inhibitors, discontinuous fibers such as wood or cellulose fibers, extender oils, mold release agents, accelerators, nucleating agents and other impact modifiers.

The moldable polyblend of the present invention can be prepared using any art-recognized method for blending polymers. For example, the polymers can be dry blended at room temperature followed by melt mixing at a temperature above the softening points of the polymers using any conventional melt mixing apparatus including extruders, calenders, kneaders, Brabender-type mixers and the like, and preferably at a temperature between about 270°C and about 300°C. An initial pre-blend can be formed of two of the three polymers to be blended, of which the third polymer and any optional ingredients can be added. For example, the ethylene copolymer containing epoxy groups and any optional ingredients can be added to a commercially available blend of aromatic polycarbonate and thermoplastic polyester.

A particularly useful blend of the present invention contains from about 28 to about 52 weight percent of an aromatic polycarbonate, from about 28 to about 42 weight percent of a thermoplastic polyester and from about 20 to about 30 weight percent of an ethylene copolymer containing epoxy groups. Preferably, the aromatic polycarbonate is Bisphenol A polycarbonate, the thermoplastic polyester is PET and the ethylene copolymer containing epoxy groups is EEA-GMA.

The molding compositions of the present invention can be directly injection molded, melt spun, cast or extruded by conventional methods well known to those of ordinary skill in the art. The compositions of the present invention are particularly useful to make injection molded articles.

The following non-limiting examples set forth hereinbelow illustrate certain aspects of the invention, but are not meant in any way to restrict the effective scope of the invention. All parts and percentages are by weight unless otherwise noted, and all temperatures are in degrees Celsius.

### EXAMPLES

### Examples 1-3

A mixture of 65 percent Bisphenol A polycarbonate (PC) and 35 percent PET were dry blended at room temperature. The mixture was then dry blended with Lotader AX 8660, an EEA-GMA from Norsolor of Paris, France. The polycarbonate had a weight average molecular weight of about 40,000 and a melt flow of about 10.0. The PET had an intrinsic viscosity of 0.64 g/dL measured in a 60/40 vol./vol. ratio blend of 1,1,2,2-tetrachloroethane and phenol at 25°C. The EEA-GMA had a melt flow of about 4.0. The blends were prepared according to the weight-percentage formulations listed in Table I. The sample of Example 3 was prepared as a control.

**TABLE I**

| Example | 1 | 2 | 3 |
|---|---|---|---|
| PC/PET (65/35) | 80 | 90 | 100 |
| EEA-GMA | 20 | 10 | 0 |

The PC/PET blend was dried in a dehumidifying oven at 110°C for 48 hours. The samples were removed and cooled in a dry environment and then dry blended with the EEA-GMA. The samples were then extruded using a Leistritz Twin-Screw Extruder and pelletized. The melt temperature was 270°C.

The compounded pellets were dried again for 6 hours at 120°C prior to injection molding with a Nissei 80T injection molding machine. Test specimens such as tensile bars, flexural bars and discs were molded. The melt temperature was 270°C. The injection pressure was 12,000 psi. The total cycle time for molding was 55 seconds. The physical properties of the samples were tested for tensile strength and elongation according to ASTM-D-638, impact strength (notched izod) according to ASTM-D-256 and for chemical resistance. Chemical resistance was tested by placing tensile bars under 0.7 percent strain and immersing the bars in a 50/50 mixture of toluene and iso-octane for ten seconds. The samples were then wiped dry and air dried for two hours, at which time the tensile strength and elongation of the exposed samples were evaluated. The physical properties of unexposed samples are shown in Table II and the physical properties of solvent exposed samples are shown in Table III.

**TABLE II**

| Example | 1 | 2 | 3 |
|---|---|---|---|
| Tensile Strength (PSI) | 5830 | 7260 | 8890 |
| Elongation (%) | 185 | 236 | 256 |
| Notched Izod (1/8") (ft. lbs.) | 16.9 | 17.3 | 1.7 |
| Notched Izod (1/4") (ft. lbs.) | 14.6 | 16.1 | 1.7 |

**TABLE III**

| Example | 1 | 2 | 3 |
|---|---|---|---|
| Tensile Strength (PSI) | 5725 | 6720 | 6170 |
| Elongation (%) | 197 | 21 | 6.8 |

The samples of Examples 1 and 2 containing 10 percent and 20 percent EEA-GMA showed significantly improved impact properties over the control sample of Example 3, containing no EEA-GMA. There was a reduction in the tensile strength and elongation, but not comparable in scale to the approximately ten-fold increase in impact properties.

The tensile strength, and particularly the elongation, of a blend following solvent exposure is a function of its chemical resistance. The samples of Examples 1 and 2 showed significantly improved solvent resistance with increasing EEA-GMA content.

The foregoing establishes that the impact strength and chemical resistance of blends of aromatic polycarbonates and thermoplastic polyesters can be improved by the addition of ethylene copolymers containing epoxy groups without the sacrifice of important physical performance properties.

As will be readily appreciated, numerous variations and combinations of the features set forth above can be utilized without departing from the present invention as set forth in the claims. Such variations are not regarded as a departure from the spirit and scope of the invention, and all such modifications are intended to be included within the scope of the following claims.

## Claims

1. A composition of matter comprising a moldable polyblend of an aromatic polycarbonate, a thermoplastic polyester and an ethylene copolymer containing epoxy groups of the formula:
X/Y/Z
wherein X is a monomeric unit formed from ethylene, wherein X comprises from about 50 to about 95 weight percent of said copolymer;
Y is a monomeric unit formed from a monomer selected from the group consisting of vinyl acetate and an acrylate monomer having the structure: 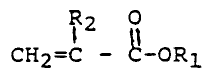 in which R₁ is selected from the group consisting of alkyl and cycloalkyl groups containing from about 1 to about 12 carbon atoms and phenyl and alkylphenyl groups, the alkyl portion of which contains from 1 to about 12 carbon atoms; R₂ is selected from the group consisting of hydrogen, methyl and ethyl; and Y comprises from about 4 to about 35 weight percent of said copolymer; and
Z is a monomeric unit formed from a monomer selected from the group consisting of glycidyl acrylate and glycidyl methacrylate, wherein Z comprises from about 1 to about 15 weight percent of said copolymer.

2. The composition of claim 1, wherein said aromatic polycarbonate is present within the range of from about 5 to about 90 weight percent of said polyblend.

3. The composition of claim 2, wherein said aromatic polycarbonate is present within the range of from about 30 to about 70 weight percent of said polyblend.

4. The composition of claim 1, wherein said aromatic polycarbonate is a product of the polycondensation of phosgene and an aromatic dihydroxy compound selected from the group consisting of resorcinol, hydroquinone, dihydroxydiphenyls and bis-(hydroxyphenyl)-derivatives.

5. The composition of claim 4, wherein said bis-(hydroxyphenyl)-derivative compounds are selected from the group consisting of bis(hydroxyphenyl)-alkanes, bis-(hydroxyphenyl)-cycloalkanes, bis-(hydroxyphenyl)-ethers, bis-(hydroxyphenyl)-ketones, bis-(hydroxyphenyl)-sulfoxides, bis-(hydroxyphenyl)-sulfones, and alpha, alpha-bis(hydroxyphenyl)-diisopropyl-benzenes.

6. The composition of claim 5, wherein said bis-(hydroxyphenyl)-alkane is selected from the group consisting of Bisphenol A and Tetramethyl Bisphenol A.

7. The composition of claim 1, wherein said aromatic polycarbonate has a weight average molecular weight of between about 20,000 and about 60,000 daltons.

8. The composition of claim 7, wherein said aromatic polycarbonate has a weight average molecular weight of between about 25,000 and about 50,000 daltons.

9. The composition of claim 1, wherein said thermoplastic polyester is present within the range of from about 5 to about 90 weight percent of said polyblend.

10. The composition of claim 9, wherein said thermoplastic polyester is present within the range of from about 30 to about 70 weight percent of said polyblend.

11. The composition of claim 1, wherein said thermoplastic polyester is a polyester of an aromatic dicarboxylic acid.

12. The composition of claim 11, wherein said polyester is a poly(alkylene terephthalate) comprising repeating units of the formula: 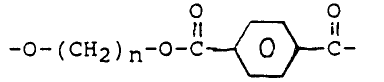 wherein n is an integer between 2 and 6.

13. The composition of claim 12, wherein said polyester is PET.

14. The composition of claim 1, wherein said thermoplastic polyester has an intrinsic viscosity of between about 0.4 and about 1.5 g/dL measured in a 60/40 vol./vol. ratio blend of 1,1,2,2-tetrachloroethane and phenol at 25°C.

15. The composition of claim 14, wherein said polyester has an intrinsic viscosity of between about 0.6 and about 1.1 g/dL measured in a 60/40 vol./vol. ratio blend of 1,1,2,2-tetrachloroethane and phenol at 25°C.

16. The composition of claim 1, wherein said ethylene copolymer containing epoxy groups is present within the range of from about 5 to about 90 weight percent of said polyblend.

17. The composition of claim 16, wherein said ethylene copolymer containing epoxy groups is present within the range of from about 10 to about 30 weight percent of said polyblend.

18. The composition of claim 1, wherein Y is formed from vinyl acetate.

19. The composition of claim 1, wherein Y is formed from said acrylate monomer.

20. The composition of claim 19, wherein R₁ of said acrylate monomer is an alkyl or cycloalkyl group containing from about 1 to about 6 carbon atoms.

21. The composition of claim 19, wherein R₂ of said acrylate monomer is hydrogen.

22. The composition of claim 1, wherein Y is present in said ethylene copolymer in a range of from about 4 to about 35 weight percent.

23. The composition of claim 1, wherein Z of said ethylene copolymer is formed from a monomer selected from the group consisting of glycidyl acrylate and glycidyl methacrylate.

24. The composition of claim 23, wherein Z is formed from glycidyl methacrylate.

25. The composition of claim 1, wherein Z is present in said ethylene copolymer in a range of from about 1 to about 15 weight percent.

26. The composition of claim 1, wherein X is present in said ethylene copolymer in a range of from about 50 to about 95 weight percent.

27. The composition of claim 1, wherein said ethylene copolymer has a melt flow between about 2 and about 15 g/10 min. at 190°C with a 2.16 kg weight as determined by ASTM D-1238.

28. The composition of claim 1, comprising from about 28 to about 52 weight percent of said aromatic polycarbonate, from about 28 to about 42 weight percent of said thermoplastic polyester, and from about 20 to about 30 weight percent of said ethylene copolymer containing epoxy groups.

29. The composition of claim 28, wherein said aromatic polycarbonate is Bisphenol A polycarbonate, said thermoplastic polyester is PET and said ethylene copolymer containing epoxy groups is EEA-GMA.

30. A molded article prepared from the molding composition of claim 1.

31. A method of producing a molded polyblend which comprises:
(a) forming a polyblend comprising an aromatic polycarbonate, a thermoplastic polyester, and an ethylene copolymer containing epoxy groups having the formula:
X/Y/Z
wherein X is a monomeric unit formed from ethylene, wherein X comprises from about 50 to about 95 weight percent of said copolymer;
Y is a monomeric unit formed from a monomer selected from the group consisting of vinyl acetate and an acrylate monomer having the structure: 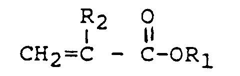 in which R₁ is selected from the group consisting of alkyl and cycloalkyl groups containing from about 1 to about 12 carbon atoms and phenyl and alkylphenyl groups, the alkyl portion of which contains from 1 to about 12 carbon atoms; R₂ is selected from the group consisting of hydrogen, methyl and ethyl, and wherein Y comprises from about 4 to about 35 weight percent of said copolymer; and
Z is a monomeric unit formed from a monomer selected from the group consisting of glycidyl acrylate and glycidyl methacrylate and comprising from about 1 to about 15 weight percent of said copolymer; and
(b) molding the polyblend.

32. A molded polyblend produced according to the method of claim 31.
